# EUROPEAN PATENT APPLICATION

(11) **EP 4 837 784 A1**
(43) Date of publication of application: **11.11.2026**
(21) Application number: 26177108.3
(22) Date of filing: 07.05.2026
(51) Int. Cl.: B60P 1/44

(54) **TAILGATE LIFT**

(30) Priority: 09.05.2025 SE 2530272
(71) Applicant: MAC Pro Innovation AB, 341 91 Ljungby (SE)
(72) Inventor: Carlsson, Magnus, 341 91 Ljungby (SE)
(74) Representative: Industripatent i Växjö AB

(57) **Abstract**

The present disclosure relates to a tailgate lift 1 for a vehicle, the tailgate lift 1 comprising a vehicle connector base 11, 13, 15, a loading platform 5 and at least first and second support arms 22, 24 configured to move and/or tilt the loading platform 5 in relation to the vehicle connector base 11, 13, 15, which comprises a transversal beam 11 extending between first and second parallel connector plates 13, 15 and is configured to attach the tailgate lift 1 to the vehicle chassis. The tailgate lift 1 comprises first and a second locking devices 21, connected to the horizontal beam 11, each locking devices 21 straddling and releasably locking therein a transversal pin 23 extending in a direction perpendicular to a connector plate 13, 15, wherein further each connector plate 13, 15 comprises an opening 25 for receiving a moveable rod 29.

## Description

### Field of the invention

The present disclosure relates to a tailgate lift for a vehicle, the tailgate lift comprising a vehicle connector base, a loading platform and at least first and second support arms configured to move and/or tilt the loading platform in relation to the vehicle connector base. Wherein the vehicle connector base comprises a horizontal beam extending between first and second parallel connector plates and is configured to attach the tailgate lift to the chassis of the vehicle.

### Background

EP-4339017-A1 describes one example of a tailgate lift of this type. While such lifts are very useful, an associated problem is still how to accomplish even more versatile transport solutions.

### Summary

One object of the present disclosure is therefore to provide a tailgate lift that makes a vehicle more versatile. This object is achieved by means of a tailgate lift as defined in claim 1. More specifically, in a tailgate lift of the initially mentioned type, first and second locking devices are provided, connected to the horizontal beam, each locking device being configured to straddle and releasably lock therein a pin extending from a vehicle chassis in a direction perpendicular to a connector plate. Further, each connector plate comprises an opening for receiving a moveable rod, which is extendable from the vehicle chassis. With this solution, the tailgate lift can be connected to a vehicle chassis by first connecting the locking devices to a corresponding fixed transversal pin, which is retained therein. Then, the vehicle connector base becomes pivotable in relation to the vehicle chassis and can be adjusted such that the openings become aligned with the respective moveable rod, which may be used to finish the connection of the tailgate lift to the vehicle chassis. Disconnection of the tailgate lift can be conducted correspondingly.

This arrangement allows the tailgate lift to be quickly attached to and removed from a vehicle as desired and by a single user. Thereby the vehicle can quickly be configured to a tailgate lift setup, and to an alternative setup where the tailgate lift is removed and replaced with lighter doors allowing a higher effective load. Thereby the vehicle as a transport solution becomes more versatile.

A reinforcement may be provided on the inner side of each connector plate, surrounding the opening. This makes it possible for a connector plate of a given thickness to take up greater forces in parallel with the plane of the connector plate.

The first and second locking devices may be connected to the horizontal beam at each end thereof. This allows for a relatively short transversal pin extending from the vehicle chassis which pin may therefore be exposed to a lesser bending force.

The locking device may form a groove for receiving and straddling the pin, and may include a moveable locking rod, which is configured to enter a space above the groove, such that the transversal pin may be locked therein. This allows for a simple procedure to lock the device to a transversal pin.

### Brief description of the drawings

Fig 1 illustrates a tailgate lift.
Fig 2 is a perspective view of a tailgate mounting base according to one example of the present disclosure.
Fig 3 illustrates truck chassis components configured to connect with the tailgate mounting base of fig 2.
Fig 4 illustrates an example of a quick-lock for use as a locking device in a tailgate mounting base as in fig 2.
Fig 5A and 5B illustrate schematically the connecting of a tailgate lift to a truck chassis.
Fig 6 shows a truck with a tailgate lift.

### Detailed description

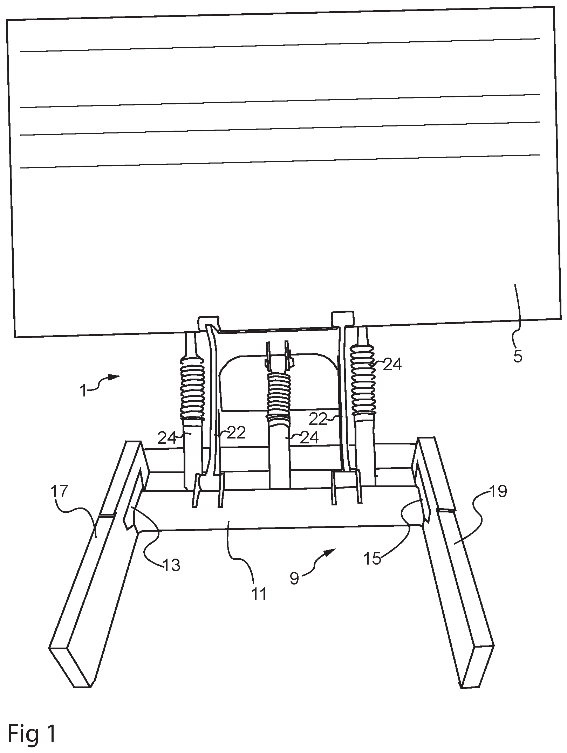

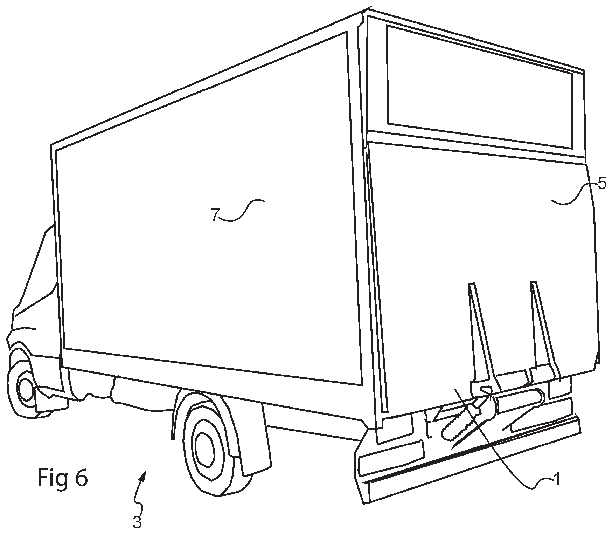

Fig 1 illustrates a tailgate lift 1 for a vehicle, typically for a truck or lorry. Fig 6 shows a truck 3 provided with the tailgate lift 1. The tailgate lift 1 comprises a loading platform 5, which in the position illustrated in fig 6 functions as a closed rear door for the truck loading compartment 7. It is possible to pivot the loading platform 5 at its lower end to a horizontal position, thereby opening the loading compartment 7 and providing a platform where goods can be placed. The loading platform 5 may then be lowered towards the ground level and raised therefrom to load and unload goods.

Returning to fig 1, the tailgate lift 1 has a base arrangement 9 comprising a transversal, horizontal beam 11 and attached thereto left and right connector plates 13, 15, configured to anchor the base arrangement 9 to left 17 and right 19, truck chassis beams, respectively.

A number of arms and actuators 22, 24 connect between the transversal beam 11 and the loading platform 5, providing the tilting and vertical movement of the loading platform 5, as is well known per se.

The base arrangement 9 must be able to transfer a significant torque to the chassis beams, especially when the loading platform 5 is in an extended horizontal position and loaded with goods placed on top of the platform 5. This implies considerable torsional strain in the interface between the connector plates 13, 15 and the truck chassis beams 17, 19 to which they are attached.

In order to deal with this strain, in known art, each connector plate 13, 15 has been provided with several holes (often eight or more) through which bolts can be fastened to a mounting kit having corresponding holes and comprising mounting features for connecting to the truck chassis beams in a configuration adapted to the specific truck model.

Typically, in known art, when mounting a tailgate lift 1 to a truck 3, the mounting kit is first attached to the beams or to a similar structure in the truck, and the connector plates 13, 15 plates are then fastened to corresponding features in the mounting kit using a number of bolts and nuts, thereby permanently attaching the tailgate lift 1 to the truck. This may take a skilled mechanic several hours with some additional assistance.

In the present disclosure, an alternative solution is proposed where a tailgate lift 1 can be quickly attached to as well as removed from a truck chassis. This solution makes the truck 3 more versatile, such that it can be adapted to different uses. The tailgate lift 1 itself weighs several hundred kilos which draws from the maximum allowed load of the truck, where the truck including load is allowed to weigh 3500 kg in some regions. In scenarios where a tailgate lift is not needed, for instance where smaller packets are handled, it can be replaced with a much lighter folding door for instance, allowing an increased load of over 10%. If later heavier units are to be handled, the tailgate lift 1 can again be fitted on the truck.

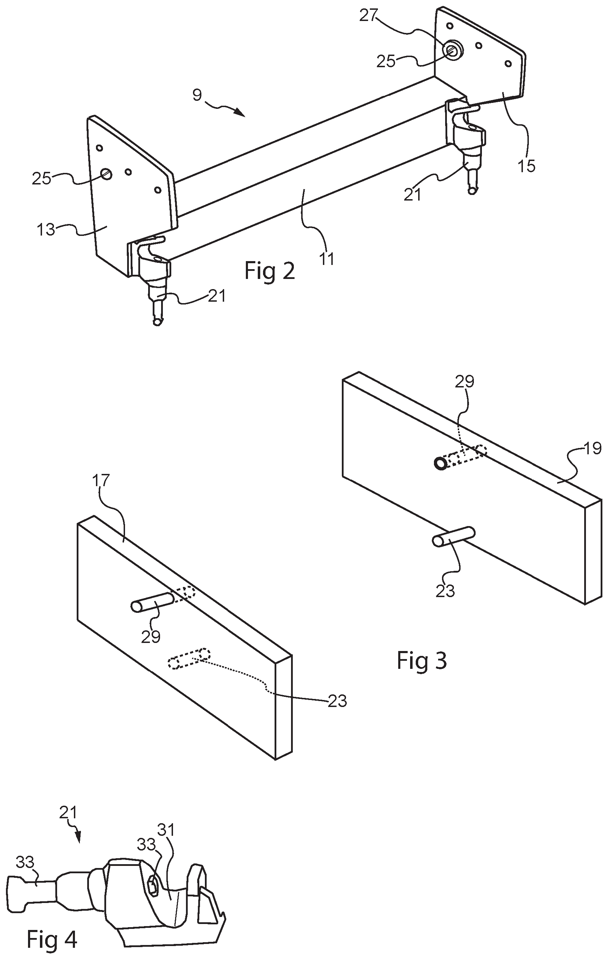

Fig 2 is a perspective view of a tailgate mounting base 9 according to one example of the present disclosure. Except for the parts configured to connect with a vehicle chassis, other parts of the tailgate lift may be devised as in fig 1.

The tailgate mounting base arrangement 9 comprises a transversal beam 11 as well as left and right connector plates 13, 15, which for instance may be welded to the ends thereof. The connector plates 13, 15 may be mutually parallel and have a suitable mutual distance for fitting snugly inside the longitudinal chassis beams 17, 19 of a truck or other vehicle, such as a trailer.

Each end of the transversal beam 11 further comprises a locking device 21 or latch, which may be devised in different ways, one example of which will be described in more detail in connection with fig 4. In general, each locking device is capable of straddling a fixed transversal pin 23, extending inwards from a chassis beam or the like, i.e. in parallel with the transversal beam 11. Once the locking device 21 straddles the fixed transversal pin 23, it may be locked therein as will be discussed.

Each connector plate 13, 15 comprises a receiver opening 25, configured to receive a moveable rod 29 (cf. fig 3), extending from a respective chassis beam 17, 19. As illustrated, there may be provided a reinforcement 27 on the inner side of each connector plate 13, 15, at the opening, typically as a ring welded to the connector plate to increase its thickness at the location of the receiver opening 25, such that an increased load may be taken up perpendicularly to the centre axis of the opening, i.e. in parallel with the connector plate plane. The reinforcement 27 has an opening with substantially the same diameter as the opening 25 in the connector plate 13, 15, and suitable such that a moveable rod 29 fits snugly therein. Typically the connector plate may be 8 mm thick and the reinforcement 27, may locally increase the thickness with an additional 20 mm.

A pair of chassis beams 17, 19 with corresponding connection features 23, 29 are illustrated in fig 3. Those connection features include the fixed transversal pins 23 or rods, extending inwards from each chassis beam. Typically those transversal pins 23 will be about 100 mm long although this may be varied depending on the location of the locking devices 21 on the aforementioned transversal beam 11. The diamater of the transversal pins 23 may be greater than 25 mm, typically about 30 mm. As the connector plates 13, 15 fit inside the chassis beams 17, 19 with a small play it is sufficient that the fixed transversal pins 23 reach into the straddling features of the locking devices 21 with a small margin. Those locking devices 21 may be located as close to the chassis beams 17, 19 as possible to reduce the bending torque applied to the fixed transversal pins 23. Thus, the locking devices 21 may be connected to the transversal beam 11 at each end thereof. Typically, the fixed transversal pins 23 may extend through the respective chassis beam 17, 19, thereby being capable of carrying a significant load.

The chassis beams 17, 19 further each comprise a moveable rod 29 configured to cooperate with the receiver opening 25 in a respective connector plate 13, 15. As will be disclosed, the movable rods may extend through chassis beams and may include locking features such that they may be locked in the extended position. The moveable rod 29 may have a diameter greater than 20 mm, typically about 25 mm.

Fig 4 illustrates one example of a locking device 21. The locking device 21 generally forms a groove 31 which is wide and deep enough to receive and straddle a transversal pin 23, and has a moveable locking rod 33, which is configured to enter a space above the groove 31, such that the transversal pin 23 is locked therein. The locking rod 33 is configured to be releasably locked in this position. Locking devices of this type are well known per se.

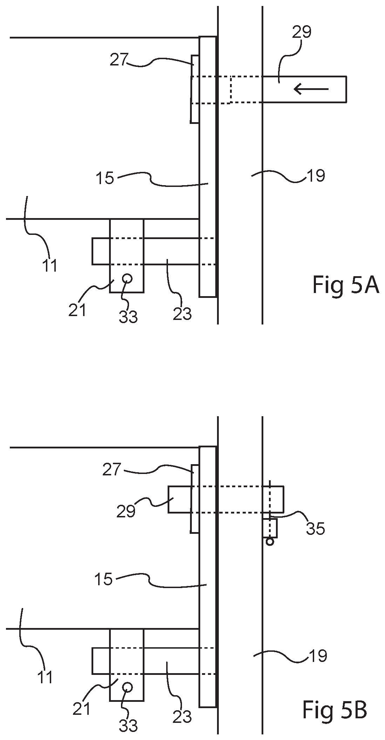

With the above outlined configuration, a tailgate lift 1 can be attached to a truck or other vehicle as follows. The vehicle connector base 11, 13, 15 of the tailgate lift 1 is inserted between the chassis beams 17, 19, with the outer face of each connector plate 13, 15 facing a respective beam. Then, the vehicle connector base is moved towards the front end of the vehicle until the transversal pin 23 of each chassis beam 17, 19 enters a corresponding locking device 21 being straddled by the locking device 21. The transversal pin 23 is locked therein, for instance by means of the aforementioned locking rod 33. This is schematically shown in fig 5A.

By securing the transversal pins 23 in the locking devices 21, the tailgate lift 1 as a whole can be pivoted on those transversal pins 23. The attaching can thus proceed by the vehicle connector base 11, 13, 15 being pivoted on the transversal pins 23 until the moveable rod 29 of each chassis beam 17, 19 is aligned with the corresponding opening 25 in the corresponding connector plate 13, 15. Then, as illustrated in fig 5B the moveable rod 29 may be inserted into the opening 25 in the connector plate 15 and into the reinforcement 27. The moveable rod 29 may reach through the chassis beam 19, and may be locked in this position by means of locking means such as a sprint 35 on the other side of the beam 19. Removal of the tailgate lift 1 is accomplished by this procedure in the reverse order.

The present disclosure is not limited to the above-described examples and may be varied and altered in different ways within the scope of the appended claims. For instance, while the tailgate mounting base arrangement above cooperates with two longitudinal chassis beams of the vehicle, other chassis configurations may provide the fixed transversal pins and the moveable rods with which the mounting base arrangement cooperates.

## Claims

1. A tailgate lift (1) for a vehicle, the tailgate lift (1) comprising a vehicle connector base (11, 13, 15), a loading platform (5) and at least first and second support arms and -actuators (22, 24) configured to move and/or tilt the loading platform (5) in relation to the vehicle connector base (11, 13, 15), which comprises a transversal beam (11) extending between first and second parallel connector plates (13, 15) and is configured to attach the tailgate lift (1) to a vehicle chassis, the tailgate lift (1) **characterized by** a first and a second locking device (21), connected to the transversal beam (11), each locking device (21) being configured to straddle and releasably lock therein a transversal pin (23) extending, from the vehicle chassis, in a direction perpendicular to a connector plate (13, 15), wherein further each connector plate (13, 15) comprises an opening (25) for receiving a moveable rod (29).

2. Tailgate lift according to claim 1, comprising a reinforcement (27) on the inner side of each connector plate (13, 15), surrounding said opening (25).

3. Tailgate lift according to claim 1 or 2, wherein said first and second locking devices (21) are connected to the transversal beam (11) at each end thereof.

4. Tailgate lift according to claim 1, wherein the locking device (21) forms a groove (31) for receiving and straddling said transversal pin (23), and has a moveable locking rod (33), which is configured to enter a space above the groove (31), such that the transversal pin (23) may be locked therein.
